# EUROPEAN PATENT SPECIFICATION

(11) **EP 1 127 745 B1**
(45) Date of publication and mention of the grant of the patent: **28.04.2004**
(21) Application number: 00830119.4
(22) Date of filing: 21.02.2000
(51) Int. Cl.: B60R 9/042

(54) **A roof rack for vehicles**
Dachgepäckträger für Kraftfahrzeuge
Porte-bagages de toit pour véhicules

(43) Date of publication of application: 29.08.2001
(73) Proprietor: MIAL S.R.L., Rosa (VI) (IT)
(72) Inventor: Solieri, Carlo, 41041 Casinalbo (MO) (IT)
(74) Representative: Gotra, Stefano

(56) References cited:
- EP-A- 0 461 709
- CH-A- 684 256
- FR-A- 2 600 954
- FR-A- 2 689 073
- US-A- 5 058 791

## Description

Specifically, though not exclusively, the invention is useful as a ladder carrier for vans. It can, however, be used also as a luggage rack, a ski rack, a bicycle rack etc. FR 2 600 954 describes a roof rack comprising the features mentioned in the preamble of claim 1.

The prior art teaches a carrier comprising a frame mounted on the roof of a vehicle and having horizontal guides parallel to the longitudinal axis of the vehicle. The known carrier further comprises a support, for carrying one or more ladders, laterally provided with two pairs of wheels, front and back, coupled to the guides of the frame. The support can run horizontally between two endrun positions, forward and rearmost with respect to the longitudinal axis of the vehicle. In the forward position, which is the transport position, the support and the ladder must not exceed a predetermined longitudinal length.

In the rearmost position, the front wheels are in a position corresponding to two openings in the guides through which the wheels can enter or exit the guides themselves. This enables the support to be rotated about the axis of the back wheels so that it can be tilted from the horizontal position into an inclined and almost vertical configuration in order for the ladder to be loaded or unloaded.

It is advantageous for the operator to use as little force as possible for this operation, so the support has to be balanced i.e. its centre of gravity must be as close as possible to the rotation axis about which the tilting is performed.

In known carriers the mobile support for the ladder cannot be too long, as it might exceed the vehicle longitudinal length limit when in the transport position. Furthermore, the tilting axis cannot be positioned too close to the front end of the support, or the support itself would not be well-balanced and the tilting operation would be more difficult. These limitations, due to problems connected with both length and balance, mean that in the prior art the support, when in the loading-unloading position, is usually raised off the ground, especially in the case of a high vehicle. To achieve ground-rest use of a small extensible stand is necessary, located below the lower end of the support.

Similar problems are exhibited when loading other objects on racks, such as luggage, skis, bicycles, etc.

The main aim of the present invention is to provide a constructionally-simple and economical rack for vehicles, in which the mobile support, in the object loading/unloading position, can rest directly on the ground. An advantage of the invention is that it provides a rack in which the force needed to raise and lower the object from the loading/unloading position and vice versa, is relatively small.

A further advantage of the object is that the longitudinal length of the rack, in the transport configuration, is relatively small.

Further characteristics and advantages of the present invention will better emerge from the detailed description that follows of a preferred but non-exclusive embodiment of the invention, illustrated purely by way of non-limiting example in the accompanying figure of the drawing, in which:
figure 1 is a side view in vertical elevation of a vehicle equipped with the rack of the invention, which in the present example is a ladder-carrier in a transport configuration;
figure 2 is the ladder-carrier of figure 1 in a ladder loading/unloading configuration;
figure 3 shows the ladder-carrier of figures 1 and 2 during passage from one configuration to another.

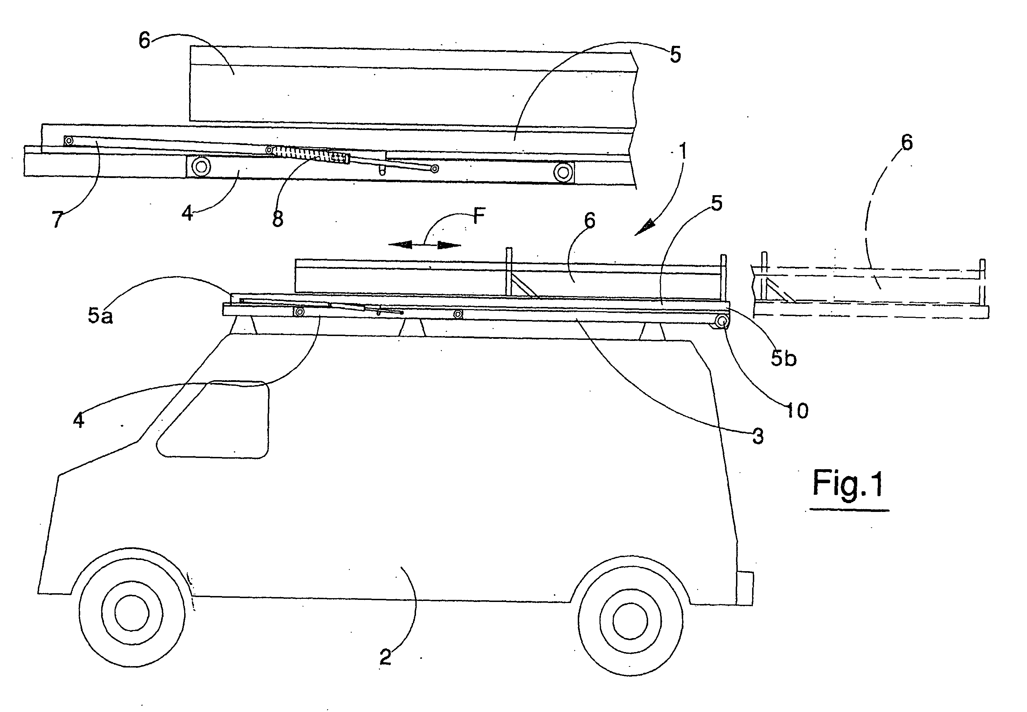

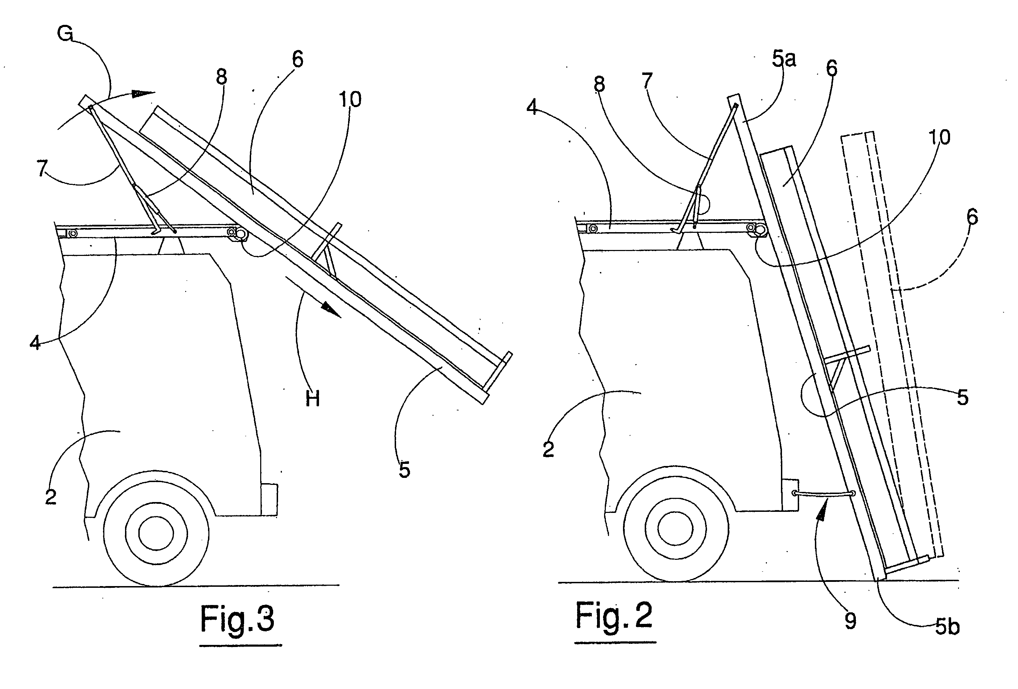

With reference to the above-mentioned figures of the drawings, I denotes in its entirety a ladder-carrier for vehicles, applied on a vehicle 2. The ladder-carrier 1 comprises a frame 3 fixed on the roof of the vehicle 2 and provided with horizontal guides which are parallel to the longitudinal axis of the vehicle. The ladder-carrier 1 comprises a truck 4 which is mobile on guides in a horizontal direction F in both directions. The truck 4 can achieve at least one forward position (figure 1) and at least one rearmost position (figures 2 and 3) with respect to the longitudinal axis of the vehicle 2.

The ladder-carrier 1 comprises a support 5 for at least one ladder 6 constrained to the truck 4, which support 5 can move along a vertical plane parallel to direction F of the truck movement. The support 5 can selectively be made to assume at least one ladder loading/unloading position (figure 2), in which it is situated behind the vehicle 2 with the truck 4 in the rearmost position, and a transport position (figure 1) in which the ladder is on the roof of the vehicle 2, with the truck 4 in the forward position.

The ladder-carrier 1 comprises a con rod 7 hinged at one end to the truck 4 and at the opposite end to the support 5, with hinging axes situated perpendicular to the movement plane of the support 5. The con rod 7 is hinged to the support 5 at a first end 5a of the support 5 itself, opposite a second end 5b thereof, destined to be very close to the ground in the loading/unloading position (figure 2).

The ladder-carrier 1 comprises means for balancing which are predisposed between the truck 4 and the support 5 for balancing the weight of the support 5 and the ladder it carries. The means for balancing have a first end which is constrained to the truck 4 and a second end, opposite to the first, which is constrained at an intermediate point of the con rod 7. In the illustrated example the means for balancing comprise at least one elastic organ preferably constituted by a hydraulic piston 8.

In the loading/unloading position, the support 5 can be anchored to the back part of the vehicle (preferably to the bumper) by removable attachment means which are constituted, for example, by one or more cables 9 having hooks at their ends. At the back end, the frame exhibits one or more idle rollers 10 which the support 5 runs on.

There now follows a brief description of how the ladder carrier is operated. For loading, one or more ladders 6 are loaded onto the support 5 (in the loading/unloading position) after which the support 5 is raised by the operator onto the vehicle roof. During the raising, as the support 5 runs on the rollers 10 and the con rod 7 rotates about its hinge axis with the truck 4, the piston 8 aids the pushing action of the operator. When the support 5 and the ladder are on the roof of the vehicle, in an intermediate position in which the support 5 and the ladder are balanced and the truck 4 is in the rearmost position, the operator pushes the truck 4 forward in order to bring it into the forward position, so as the reach the ladder transport position of figure 1. To unload the ladder the above operations are reversed; figure 3 illustrates the ladder-carrier during an unloading phase; G denotes the rotation of the con rod 7 during the tilting of the support 5 and H indicates the contemporaneous downwards run of the support 5 on the idle roller 10. The effort required of the operator for displacing the support 5 and the ladder, either during loading or unloading, is relatively small. In the loading/unloading position, the lower end 5b of the support 5 can rest on the ground without any need for extensions. In other embodiments the support 5 can be easily predisposed to be used as a luggage-rack, or a ski-rack or bicycle rack etc.

## Claims

1. A roof rack for vehicles, **characterised in that** it comprises: **comprising :**
a frame (3) fixed on a roof of a vehicle (2) and provided with horizontal guides which are parallel to a longitudinal axis of a vehicle;
a truck (4) which is mobile on the guides in a horizontal direction, and which can assume at least one forward position and at least one rearmost position with respect to the longitudinal axis;
a support (5) for at least one object (6) constrained to the truck (4), which support (5) can move along a vertical plane which is parallel to a movement direction of the truck (4), the support (5) being able selectively to assume at least one loading/unloading position of the object (6), in which the support (5) is situated behind the vehicle (2) with the truck (4) in the rearmost position, and one position for transport of the object (6), in which the support (5) is situated on the roof of the vehicle (2) with the truck (4) in the forward position;
means for balancing (8) predisposed between the truck (4) and the support (5) for balancing a weight of the support (5); **characterised in that** it comprises :
a con rod (7), hinged at one end thereof to the truck (4) and at another, opposite end thereof to the support (5), with hinging axes perpendicular to a movement plane of the support (5).

2. The roof rack of claim 1, **characterised in that** the con rod (7) is hinged to the support (5) at a first end (5a) of the support (5), which first end (5a) is opposite to a second end (5b) destined, in the loading/unloading position, to be very close to the ground.

3. The roof rack of claim 1 or 2, **characterised in that** the means for balancing have a first end which is constrained to the truck (4) and a second end, opposite to the first end, which is constrained at an intermediate point of the con rod (7).

4. The roof rack of any one of the preceding claims, **characterised in that** the means for balancing comprise at least one elastic organ, preferably a hydraulic piston (8).

5. The roof rack of any one of the preceding claims, **characterised in that** the support (5) can assume a balanced intermediate position in which it carries the object (6) and in which the support (5) is situated on the roof of the vehicle with the truck (4) in the rearmost position.

## Patentansprüche

1. Dachgepäckträger für Kraftfahrzeuge, enthaltend:
- einen Rahmen (3), der an einem Dach eines Kraftfahrzeugs (2) befestigt und mit horizontalen Führungen versehen ist, welche parallel zu einer Längsachse des Kraftfahrzeugs verlaufen;
- einen Schlitten (4), welcher auf den Führungen in einer horizontalen Richtung beweglich ist, und welcher wenigstens eine vorgeschobene Position und wenigstens eine am weitesten zurückgesetzte Position im Verhältnis zu der Längsachse einnehmen kann;
- eine an dem Schlitten (4) befestigte Halterung (5) für wenigstens einen Gegenstand (6), welche Halterung (5) sich entlang einer vertikalen Ebene bewegen kann, die parallel zu einer Bewegungsrichtung des Schlittens (4) verläuft, wobei die Halterung (5) wahlweise wenigstens eine Lade-/Entladeposition des Gegenstandes (6) einnehmen kann, in welcher die Halterung (5) hinter dem Kraftfahrzeug (2) und mit dem Schlitten (4) in der am weitesten zurückgesetzten Position angeordnet ist, und eine Position für den Transport des Gegenstandes (6), in welcher die Halterung (5) auf dem Dach des Kraftfahrzeugs (2) angeordnet ist, mit dem Schlitten (4) in der vorgeschobenen Position;
- Gleichgewichtsmittel (8), vorgesehen zwischen dem Schlitten (4) und der Halterung (5), um das Gewicht der Halterung (5) auszugleichen;
**dadurch gekennzeichnet, dass** er eine Verbindungsstange (7) enthält, angelenkt mit einem Ende an den Schlitten (4) und mit dem anderen, entgegengesetzten Ende an die Halterung (5), und zwar mit Scharnierachsen, die lotrecht zu einer Bewegungsebene der Halterung (5) verlaufen.

2. Dachgepäckträger nach Patentanspruch 1, **dadurch gekennzeichnet, dass** die Verbindungsstange (7) an die Hal-terung (5) an ein erstes Ende (5a) der Halterung (5) angelenkt ist, welches Ende (5a) sich entgegengesetzt von einem zweiten Ende (5b) befindet, dazu bestimmt, in der Lade-/Entladeposition sehr dicht am Boden zu sein.

3. Dachgepäckträger nach Patentanspruch 1 oder 2, **dadurch gekennzeichnet, dass** die Gleichgewichtsmittel ein erstes Ende haben, welches an dem Schlitten (4) gehalten ist, und ein zweites Ende, entgegengesetzt zu dem ersten Ende, welches an einem mittleren Punkt der Verbindungsstange (7) gehalten ist.

4. Dachgepäckträger nach einem beliebigen der vorstehenden Patentansprüche, **dadurch gekennzeichnet, dass** die Gleichgewichtsmittel wenigstens ein elastisches Element enthalten, vorzugsweise einen Hydraulikkolben (8).

5. Dachgepäckträger nach einem beliebigen der vorstehenden Patentansprüche, **dadurch gekennzeichnet, dass** die Halterung (5) eine ausgeglichene Zwischenposition einnehmen kann, in welcher sie den Gegenstand (6) trägt, und in welcher die Halterung (5) auf dem Dach des Kraftfahrzeugs (2) angeordnet ist, mit dem Schlitten (4) in der am weitesten zurückgesetzten Position.

## Revendications

1. Porte-bagages de toit pour véhicules, comprenant:
- un châssis (3) fixé sur le toit d'un véhicule (2) et pourvu de guides horizontaux parallèles à un axe longitudinal du véhicule;
- un chariot (4) mobile sur les guides en direction horizontale, pouvant assumer au moins une position avancée et au moins une position reculée par rapport à l'axe longitudinal;
- un support (5) pour au moins un objet (6) rendu solidaire du chariot (4); lequel support (5) peut se mouvoir le long d'un plan vertical parallèle à une direction de mouvement du chariot (4), le support (5) pouvant sélectivement assumer au moins une position de chargement/déchargement de l'objet (6), dans laquelle le support (5) est situé derrière le véhicule (2) avec le chariot (4) dans la position plus reculée, et une position de transport de l'objet (6), dans laquelle le support (5) est situé sur le toit du véhicule (2) avec le chariot (4) dans la position avancée;
- des moyens d'équilibrage (8) prédisposés entre le chariot (4) et le support (5) pour équilibrer un poids du support (5);
**caractérisé en ce qu'**il comprend:
une bielle (7), articulée sur une de ses extrémités au chariot (4), et sur l'autre extrémité opposée au support (5), avec des axes d'articulation perpendiculaires à un plan de mouvement du support (5).

2. Porte-bagages selon la revendication 1, **caractérisé en ce que** la bielle (7) est articulée au support (5) sur une première extrémité (5a) du support (5), laquelle première extrémité (5a) est opposée à une seconde extrémité (5b) destinée, dans la position de chargement/déchargement, à être très proche du sol.

3. Porte-bagages selon la revendication 1 ou 2, **caractérisé en ce que** les moyens d'équilibrage présentent une première extrémité fixée au chariot (4) et une seconde extrémité, opposée à la première, fixée à un point intermédiaire de la bielle (7).

4. Porte-bagages selon n'importe laquelle des revendications précédentes, **caractérisé en ce que** les moyens d'équilibrage comprennent au moins un organe élastique, préférablement un piston hydraulique (8).

5. Porte-bagages selon n'importe laquelle des revendications précédentes, **caractérisé en ce que** le support (5) peut assumer une position équilibrée intermédiaire dans laquelle il porte l'objet (6) et dans laquelle le support (5) est situé sur le toit du véhicule avec le chariot (4) dans la position plus reculée.
